# EUROPEAN PATENT SPECIFICATION

(11) **EP 4 262 417 B1**
(45) Date of publication and mention of the grant of the patent: **30.04.2025**
(21) Application number: 21739300.8
(22) Date of filing: 25.06.2021
(51) Int. Cl.: A23F 3/14, A23F 3/40, A23L 2/52, A23L 2/56, A23L 2/60

(54) **AN IRON FORTIFIED TEA COMPOSITION**
MIT EISEN ANGEREICHERTE TEEZUSAMMENSETZUNG
COMPOSITION DE THÉ ENRICHIE EN FER

(30) Priority: 15.12.2020 IN 202021054641
(43) Date of publication of application: 25.10.2023
(73) Proprietor: Ekaterra Research and Development UK Limited, Sharnbrook, Bedfordshire MK44 1LQ (GB)
(72) Inventor: KUMARAN, Vetri, Bangalore 560 066 (IN); MHASAVADE, Deepak Ramachandra, Bangalore 560 066 (IN); PALAGIRI, Swathy, Bangalore 560 066 (IN); VELUSAMY, Balamurugan, Bangalore 560 066 (IN)
(74) Representative: Mewburn Ellis LLP
(86) International application number: PCT/EP2021/067549
(87) International publication number: WO 2022/128174

(56) References cited:
- CN-A- 106 857 934
- US-A- 5 002 779
- US-A1- 2018 279 638
- ANONYMOUS: "Banana flavour diet meal", GNPD, 1 September 2010 (2010-09-01), XP002761828
- ÇAM MUSTAFA ET AL: "Application of pressurized water extraction and spray drying techniques to produce soluble spearmint tea", JOURNAL OF FOOD MEASUREMENT AND CHARACTERIZATION, SPRINGER US, BOSTON, vol. 12, no. 3, 12 April 2018 (2018-04-12), pages 1927 - 1934, XP036554133, ISSN: 2193-4126, [retrieved on 20180412], DOI: 10.1007/S11694-018-9808-2

## Description

### Field of the Invention

The present invention relates to a tea composition. In particular, the present invention relates to an iron fortified tea composition.

### Background and Prior Art

Tea is one of the most popular beverages in the world. It is believed that consumption of tea refreshes our mind. Polyphenols that are present in tea are also considered to be good for human health. There are varieties of tea available in the market, e.g. black tea, green tea, oolong tea, white tea, *etc.* Black tea is generally prepared by a process which includes the steps of withering, macerating, fermenting, and firing/drying. On the other hand, green tea manufacturing process does not include the step of fermentation. Therefore, the characteristic profile of green tea is different from that of black tea.

Most of the people in Asian countries drinks tea at least twice a day or even more. Therefore, tea could be one of the ways of delivering nutrients and essentials elements.

Iron is one of the most important elements needed for proper functioning of human body. It is an essential element to produce blood in human body. Iron deficiency can lead to anaemia which can become serious if not treated on time. Hence, there are several iron fortified foods products are available in the market.

There are also prior arts which discloses iron fortified food products.

US6998143 (Nestle, 2006) discloses an iron fortification complex which may be used to fortify foods and beverages with iron. The complex is formed of ferric ions and caseinate. The complex is sufficiently stable as to be suitable for use in retorted products. However, despite the stability, the iron in the complexes has substantially the same bioavailability as ferrous sulfate.

WO03032741 (Unilever, 2003) discloses a tea product fortified with a ferrous-plant protein hydrolysate complex. The complex does not cause precipitation of iron-polyphenol; complexes in the tea and is also bioavailable. A tea drink made from the tea of the invention has an attractive colour. CN 106 857 934 describes melon tea composition comprising iron compound (in the melon (paragraph 4), maltodextrin and gum Arabic. US 5 002 779 describes a composition comprising iron with many nutrients encapsulated in maltodextrin and gum arabic. US 2018/279638 discloses iron fortified tea preparation which is chelated in order to reduce the precipitation of iron with the polyphenols. ÇAM MUSTAFA ET AL: "Application of pressurized water extraction and spray drying techniques to produce soluble spearmint tea", JOURNAL OF FOOD MEASUREMENT AND CHARACTERIZATION, SPRINGER US, BOSTON, vol. 12, no. 3, 12 April 2018 (2018-04-12), pages 1927-1934 discloses tea coated with maltodextrin and gum arabic.

We have found that, fortifying a tea product with iron is particularly problematic. It is believed that this problem arises because polyphenol compounds that are present in tea reacts with iron to form precipitates and make the colour of the beverage quite dark, less bright and less red. The red colour is mainly associated with black tea products. This is not acceptable by consumers.

On the other hand, as most of the people consumes tea more than once in a day, it is considered to be one of the suitable products for delivering iron to human body. Hence, the delivery of the iron at the infusions also need to be adequate.

Therefore, iron fortified tea product with bright and rich red colour infusion remains to be desired.

### Objects of the invention

In view of the foregoing, it is an object of the present invention to provide an iron fortified tea composition.

It is another object of the present invention to provide an iron fortified tea composition with bright and rich red colour infusion.

The present inventors have surprisingly found that including few selected iron salts in a micronized form along with a particular selection of two polysaccharides provide an iron fortified tea composition with rich red colour and bright infusion characteristics.

### Summary of the invention

In a first aspect, the present invention provides a tea composition comprising;
a) a micronized iron compound;
b) a first polysaccharide comprising maltodextrin;
c) a second polysaccharide comprising gum arabic; and,
d) a leaf tea product, wherein the particle size of the iron compound is in the range of 0.1 to 10 micron.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

The present invention provides a tea composition comprising;
a) a micronized iron compound;
b) a first polysaccharide comprising maltodextrin;
c) a second polysaccharide comprising gum arabic; and,
d) a leaf tea product, wherein the particle size of the iron compound is in the range of 0.1 to 10 micron.

The iron compounds may be procured in higher size followed by a process of size reduction to obtain a micronized iron compound of desirable size as mentioned above.

Alternately, the iron particle in a micronized form can also be directly procured to be used for the present invention.

It is preferred that the solubility of the iron compound in water at 25°C is less than 0.001g/mL, more preferably less than 0.0005 g/mL. Most preferably the iron compound is water insoluble.

The iron compound may preferably be selected from iron oxide, ferric pyrophosphate, carbonyl iron, electrolytic iron and combination thereof. The most preferred iron compound is iron oxide.

The amount of iron compound preferably in the range of 0.5 to 4 %, more preferably 1 to 3%, and most preferably 1.5 to 2% by weight of the composition.

The composition of the present invention also comprises two polysaccharides. The first polysaccharide comprising maltodextrin. In a most preferred aspect, the first polysaccharide is maltodextrin

Maltodextrin is a very well-known food additive. It is a flavourless substance. It is generally produced from vegetable starch by hydrolysis. The starch is preferably corn or wheat. It is generally known to improve the mouthfeel of savouries.

The amount of maltodextrin used in the composition of the present invention is preferably in the range of 0.5 to 5%, more preferably 1 to 4%, furthermore preferably 2 to 4% and most preferably 2 to 3% by weight of the composition.

The composition of the present invention also comprises a second polysaccharides. The second polysaccharide is gum arabic. It is also commonly known as gum acacia. It is an edible water-soluble gum widely used in food industries as stabilizer and/or thickener.

The amount of gum arabic in the composition of the present invention preferably is in the range of 0.05 to 6%, more preferably 0.1 to 4%, further preferably 0.1 to 3% and most preferably 0.5 to 2% by weight.

The composition of the present invention comprises a leaf tea product. A leaf tea product preferably means a tea product which is obtained after the tea manufacturing processes and comprise less than 10%, preferably less than 7% and most preferably less than 5% moisture by weight of the leaf tea product.

The leaf tea product may preferably be selected from a black tea product, a green tea product, an oolong tea product, a white tea product or blends thereof.

Black tea generally refers to fermented tea and produced by processing fresh tea leaves. Fresh tea leaf refers to tea leaf, buds and/or stem that have never been dried to a water content of less than 30% by weight, and usually have moisture content in the range 60 to 90%. Black tea has different characteristics to green tea. Black tea is more astringent in taste and less bitter than green tea. The redness of black tea liquor is also significantly higher than that of green tea. Black tea also contains higher level of theaflavins.

In the process of black tea, fermentation refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

Green tea refers to substantially unfermented tea. Green tea has different characteristics than black tea. Green tea liquor is light in colour unlike black tea. Green tea also enriched with catechins and low or no amount of theaflavins.

Oolong tea refers to semi-fermented tea.

The preferred leaf tea product for the purpose of the present invention is either black tea or green tea, the most preferred is black tea.

The amount of leaf tea product in the composition is preferably in the range of 85 to 98.5%, more preferably 87 to 98.5%, furthermore preferably 90 to 98.5% and most preferably 92 to 98.5% by weight of the composition.

The composition as per the present invention may comprise further nutrients. The further nutrients may be selected from vitamin C or any other suitable nutrient.

The present invention also provides a process of providing an iron fortified tea composition comprising the steps of:
a) providing an iron compound with solubility less than 0.001g/mL in water at 25°C;
b) micronizing the iron compound to produce particle size in the range of 0.1 - 10 micron;
c) adding a first polysaccharide comprising maltodextrin and a second polysaccharide comprising gum arabic to the micronized iron compound;
d) mixing the materials of step (c) to obtain a coating mixture; and,
e) coating a leaf tea product with the coating mixture obtained in step d.

The process starts with providing an iron compound with solubility less than 0.001g/mL in water at 25°C. More preferably the solubility is less than 0.0005 g/mL. Most preferably the iron compound is water insoluble. After that the iron compound undergoes a step of micronization (size reduction) in to the range of 0.1 to 10 micron.

Alternately iron compound with the above-mentioned solubility and particle size can directly be used in the process of the present invention.

In the next step a first polysaccharide comprising maltodextrin and a second polysaccharide comprising gum arabic is added to the micronized iron compound. Then these materials are properly mixed to obtain a coating mixture. After that, this coating mixture is coated on a leaf tea product. The leaf tea product may preferably be selected from a black tea product, a green tea product, an oolong tea product, a white tea product or blends thereof.

Water is preferably added while preparing the coating solution as it helps in better mixing of the ingredients. Preferably, the temperature of the water is in the range of 25°C to 75°C, more preferably 30°C to 70°C, further more preferably 35°C to 65°C and most preferably 35°C to 55°C.

The present invention will now be demonstrated by way of non-limiting examples below. The examples are for illustration only and do not limit the scope of the invention in any manner.

### Examples:

### Preparation of different iron fortified tea products

A set of different iron fortified tea products were prepared using the processes as described below;

### Example A:

5g of ferrous fumarate (solubility: 0.14g/100g water at 25°C), 1g of Gum Arabic and 3g of maltodextrin were dissolved in 43g of distilled water (at 50°C) to prepare a coating solution. Then, 91g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80°C.

Then 1.9g of the dried tea as produced above was blended with 0.1g of regular back leaf tea (obtained from Kenya). The blend was then used to prepare tea infusion.

### Example B:

5g of ferrous fumarate (solubility: 0.14g/100g water at 25°C), 1g of gum arabic and 3g of maltodextrin were dissolved in 43g of distilled water (at 50°C) to prepare a coating solution. Then, 91g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80°C.

Then 1.8g of the dried tea as produced above was blended with 0.2g of regular back leaf tea (obtained from Kenya). The blend was then used to prepare tea infusion.

### Example 1:

2.6g of iron oxide (insoluble in water) was micronized to 10micron particles using a mill (Analytical mill, model: **IKA** A11 basic). Then, 1g of gum arabic and 3g of maltodextrin were dissolved in 43g of distilled water (at 50°C) to prepare binder solution. The micronized iron oxide was added to the binder solution to prepare a coating solution. After this, 93.4g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80°C.

Then 1.9g of the dried tea as produced above is blended with 0.1g of regular back leaf tea (obtained from Kenya). The blend was then used to prepare tea infusion.

### Example 2:

2.6g of iron oxide (insoluble in water) was micronized to 10micron particles using a mill (Analytical mill, model: **IKA** A11 basic). Then, 1g of gum arabic and 3g of maltodextrin were dissolved in 43g of distilled water (at 50°C) to prepare binder solution. The micronized iron oxide was added to the binder solution to prepare a coating solution. After this, 93.4g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80°C.

Then 1.8g of the dried tea as produced above is blended with 0.2g of regular back leaf tea (obtained from Kenya). The blend was then used to prepare tea infusion.

For the examples, ferrous fumarate was obtained from Sigma Aldrich (Catalogue no. F5381), gum arabic was obtained from Merck (Catalogue no. 1042281000), maltodextrin was obtained from Sigma Aldrich (Catalogue no. 419699-100G) and iron oxide was obtained from Sigma Aldrich (Catalogue no. 529311)

Infusions were prepared using the above tea products by following the protocol as described below:
2g of tea product was taken in a and 200mL of boiling water was poured in it. After 2 minutes of brewing, the content was filtered using a strainer and the filtered tea was taken for further analysis.

The a* and b* values were then measured using the following procedure:
Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°- Observer angle. Measurements were made using a quartz cuvette of 10 mm path length. Tea infusions as prepared above was filled up to the brim in the cuvette and placed in the instrument for colour measurement. The instrument was calibrated using a standard white tile (Hunterlab Duffuse/8°, mode-RSEX, Port-1" and area- large) in accordance with the instructions provided in the instructions manual. The L*a*b* values were measured at room temperature (25°C).

The a* and b* axes have no specific numerical limits. Positive a* is red and negative a* is green. The higher the a* value, the redder the infusion appears. Similarly, positive b* is yellow and negative b* is blue. The higher the b* value, the brighter the infusion appears.

Further, the amount of iron in the tea infusions were measured following the regular ICP-OES (Inductively coupled plasma - Optical Emission Spectrophotometer) procedure:
The tea infusion was acidified with concentrated nitric acid (~65%) and digested in a microwave digester (Make: Anton Paar, Model: Multiwave Go) for 60 minutes. The digested solution was then injected in ICP-OES (Perkin Elmer) and the emission spectral intensity was measured at the wavelength of 213.8nm. The intensity was then converted to concentration of iron using a standard calibration curve.

The results are summarized below in Table 1:

**Table 1:**

| Example No | Amount of Iron coated (mg/2g of black leaf tea) | Amount of iron delivered in the infusion (mg/2g of black leaf tea) | % Delivery of iron | a* value | b* value |
|---|---|---|---|---|---|
| A | 1.56 | 0.66 | 42 | 7.95 | 44.72 |
| B | 3.12 | 1.30 | 42 | 7.87 | 38.26 |
| 1 | 1.83 | 1.40 | 77 | 11.63 | 56.89 |
| 2 | 3.66 | 3.34 | 91 | 11.12 | 53.33 |

From the above table it is evident that examples (1 and 2) those are within the scope of the present invention provides tea infusions with enriched redness (a*) and enhanced brightness (b*). On the other hand, examples A and B provides much inferior tea infusion in terms of a* and b* value. Furthermore, Examples 1 and 2 provides much higher iron delivery when compared with Examples A and B.

Another set of different iron fortified tea products were prepared using the processes as described below:

### Example C:

This example is same as Example A (with ferrous fumarate) except the following blending amount is different.

In this case, 3.8g of the dried tea as produced was blended with 0.2g of regular back leaf tea (obtained from Kenya). The blend was then used to prepare tea infusion.

### Example D:

This example is same as Example B (with ferrous fumarate) except the following blending amount is different.

In this case, 3.6g of the dried tea as produced was blended with 0.4g of regular back leaf tea (obtained from Kenya). The blend was then used to prepare tea infusion.

### Example 3:

This example is same as Example 1 (with iron oxide) except the following blending amount is different.

In this case, 3.8g of the dried tea as produced was blended with 0.2g of regular back leaf tea (obtained from Kenya). The blend was then used to prepare tea infusion.

### Example 4:

This example is same as Example 2 (with iron oxide) except the following blending amount is different.

In this case, 3.6g of the dried tea as produced was blended with 0.4g of regular back leaf tea (obtained from Kenya). The blend was then used to prepare tea infusion.

After above tea products were prepared, the milk infusions were produced from the tea products using the following protocol:
120mL of water was added to 80mL of milk and taken in a pan. After that 4g of tea product was added in it. The pan was heated on a stove. After one raising of milk, the content was filtered using a strainer and the filtered milk tea infusion was taken for further analysis.

The a* and b* values were then measured using the procedure as described in the previous section.

The results are summarized below in Table2:

**Table 2:**

| Example No | a* value | b* value |
|---|---|---|
| C | 5.75 | 14.91 |
| D | 4.44 | 10.17 |
| 3 | 7.81 | 17.75 |
| 4 | 8.75 | 17.54 |

From the above table it is clear that examples (3 and 4) those are within the scope of the present invention provides tea infusions with enriched redness (a*) and enhanced brightness (b*). On the other hand, examples C and D provides much inferior tea infusion in terms of a* and b* value.

Therefore, whether it is milk tea infusion or regular infusion, the tea products produced by the present invention provides much higher a* and b* values.

## Claims

1. A tea composition comprising;
a) a micronized iron compound;
b) a first polysaccharide comprising maltodextrin;
c) a second polysaccharide comprising gum arabic; and,
d) a leaf tea product,
wherein the particle size of the micronized iron compound is in the range of 0.1 to 10 micron.

2. A composition according to claim 1 wherein the solubility of the iron compound in water at 25°C is less than 0.0001g/100mL.

3. The composition according to any one of the preceding claims 1 or 2 wherein the iron compound is selected from iron oxide, ferric pyrophosphate, carbonyl iron, electrolytic iron and combination thereof.

4. The composition according to any one of the preceding claims wherein the iron compounds are iron oxide, ferric pyrophosphate.

5. The composition according to any one of the preceding claims wherein the amount of maltodextrin is in the range of 0.5 to 5% by weight of the composition.

6. The composition according to any one of the preceding claims wherein the amount of gum arabic is in the range of 0.05 to 6% by weight.

7. The composition according to any one of the preceding claims wherein the leaf tea product is selected from a black tea product, a green tea product, an oolong tea product, a white tea product or blends thereof.

8. The composition according to claim 7 wherein the leaf tea product is a black tea product.

9. The composition according to any one of the preceding claims wherein the amount of leaf tea product in the composition is in the range of 85 to 98.5% by weight of the composition.

10. The composition as claimed in any one of the preceding claims may comprise further nutrients.

11. A process of providing an iron fortified tea composition comprising the steps of:
a) providing an iron compound with solubility less than 0.0001g/mL in water at 25°C;
b) micronizing the iron compound to produce particle size in the range of 0.1 - 10 micron;
c) adding a first polysaccharide comprising maltodextrin and a second polysaccharide comprising gum arabic to the micronized iron compound;
d) mixing the materials of step (c) to obtain a coating mixture; and,
e) coating a leaf tea product with the coating mixture obtained in step d.

12. A process according to claim 11 wherein water is added at step (d).

13. A process according to claim 11 or claim 12 wherein the temperature of the water is in the range of 25°C to 75°C.

## Patentansprüche

1. Teezusammensetzung, umfassend:
a) eine mikronisierte Eisenverbindung;
b) ein erstes Polysaccharid, umfassend Maltodextrin;
c) ein zweites Polysaccharid, umfassend Gummi arabicum; und
d) ein Blattteeprodukt,
wobei die Teilchengröße der mikronisierten Eisenverbindung im Bereich von 0,1 bis 10 µm liegt.

2. Zusammensetzung nach Anspruch 1, wobei die Löslichkeit der Eisenverbindung in Wasser bei 25 °C geringer als 0,0001 g/100 ml ist.

3. Zusammensetzung nach einem der vorangegangenen Ansprüche 1 oder 2, wobei die Eisenverbindung aus Eisenoxid, Eisen(III)-pyrophosphat, Carbonyleisen, elektrolytischem Eisen und Kombinationen daraus ausgewählt ist.

4. Zusammensetzung nah einem der vorangegangenen Ansprüche, wobei die Eisenverbindungen Eisenoxid, Eisen(III)-pyrophosphat sind.

5. Zusammensetzung nach einem der vorangegangenen Ansprüche, wobei die Menge von Maltodextrin im Bereich von 0,5 bis 5 Gew.-% der Zusammensetzung liegt.

6. Zusammensetzung nach einem der vorangegangenen Ansprüche, wobei die Menge von Gummi arabicum im Bereich von 0,05 bis 6 Gew.-% liegt.

7. Zusammensetzung nach einem der vorangegangenen Ansprüche, wobei das Blattteeprodukt aus einem Schwarzteeprodukt, einem Grünteeprodukt, einem Oolong-Teeprodukt, einem Weißteeprodukt oder Mischungen davon ausgewählt ist.

8. Zusammensetzung nach Anspruch 7, wobei das Blattteeprodukt ein Schwarzteeprodukt ist.

9. Zusammensetzung nach einem der vorangegangenen Ansprüche, wobei die Menge des Blattteeprodukts in der Zusammensetzung im Bereich von 85 bis 98,5 Gew.-% der Zusammensetzung liegt.

10. Zusammensetzung nach einem der vorangegangenen Ansprüche, die weitere Nährstoffe umfassen kann.

11. Verfahren zum Bereitstellen einer eisenergänzten Teezusammensetzung, umfassend folgende Schritte:
a) Bereitstellen einer Eisenverbindung mit einer Löslichkeit von weniger als 0,0001 g/ml in Wasser bei 25 °C;
b) Mikronisieren der Eisenverbindung, um eine Teilchengröße im Bereich von 0,1 bis 10 µm zu erzeugen;
c) Zusetzen eines ersten Polysaccharids, umfassend Maltodextrin, und eines zweiten Polysaccharids, umfassend Gummi arabicum, zu der mikronisierten Eisenverbindung;
d) Vermischen der Materialien aus Schritt c), um ein Beschichtungsgemisch zu erhalten; und
e) Beschichten eines Blattteeprodukts mit dem in Schritt d) erhaltenen Beschichtungsgemisch.

12. Verfahren nach Anspruch 11, wobei in Schritt d) Wasser zugesetzt wird.

13. Verfahren nach Anspruch 11 oder Anspruch 12, wobei die Temperatur des Wassers im Bereich von 25 °C bis 75 °C liegt.

## Revendications

1. Composition de thé, comprenant :
a) un composé de fer micronisé ;
b) un premier polysaccharide comprenant de la maltodextrine ;
c) un second polysaccharide comprenant de la gomme arabique ; et,
d) un produit à base de thé en feuilles,
dans laquelle la taille de particule du composé de fer micronisé est dans la plage de 0,1 à 10 microns.

2. Composition selon la revendication 1, dans laquelle la solubilité du composé du fer dans l'eau à 25°C est inférieure à 0,0001 g/100 mL.

3. Composition selon l'une quelconque des revendications précédentes 1 ou 2, dans laquelle le composé de fer est choisi parmi l'oxyde de fer, le pyrophosphate ferrique, le fer carbonyle, le fer électrolytique et une combinaison de ceux-ci.

4. Composition selon l'une quelconque des revendications précédentes, dans laquelle les composés de fer sont l'oxyde de fer, le pyrophosphate ferrique.

5. Composition selon l'une quelconque des revendications précédentes, dans laquelle la quantité de maltodextrine est dans la plage de 0,5 à 5 % en poids de la composition.

6. Composition selon l'une quelconque des revendications précédentes, dans laquelle la quantité de gomme arabique est dans la plage de 0,05 à 6 % en poids.

7. Composition selon l'une quelconque des revendications précédentes, dans laquelle le produit à base de thé en feuilles est choisi parmi un produit à base de thé noir, un produit à base de thé vert, un produit à base de thé oolong, un produit à base de thé blanc ou des mélanges de ceux-ci.

8. Composition selon la revendication 7, dans laquelle le produit de thé en feuilles est un produit de thé noir.

9. Composition selon l'une quelconque des revendications précédentes, dans laquelle la quantité de produit de thé en feuilles dans la composition est dans la plage de 85 à 98,5 % en poids de la composition.

10. Composition selon l'une quelconque des revendications précédentes, pouvant comprendre des nutriments supplémentaires.

11. Procédé de fourniture d'une composition de thé enrichie en fer, comprenant les étapes consistant à :
a) fournir un composé de fer avec une solubilité inférieure à 0.0001 g/mL dans de l'eau à 25°C ;
b) microniser le composé de fer pour produire une taille de particule dans la plage de 0,1 à 10 microns ;
c) ajouter un premier polysaccharide comprenant de la maltodextrine et un second polysaccharide comprenant de la gomme arabique au composé de fer micronisé ;
d) mélanger les matériaux de l'étape (c) pour obtenir un mélange de revêtement ; et,
e) revêtir un produit de thé en feuilles avec le mélange de revêtement obtenu à l'étape d.

12. Procédé selon la revendication 11, dans lequel de l'eau est ajoutée à l'étape (d).

13. Procédé selon la revendication 11 ou la revendication 12, dans lequel la température de l'eau est dans la plage de 25°C à 75°C.
